(19) Europäisches Patentamt
European Patent Office
Office européen des brevets

(11) **EP 1 565 363 B1**

(12) **EUROPÄISCHE PATENTSCHRIFT**

(45) Veröffentlichungstag und Bekanntmachung des Hinweises auf die Patenterteilung:
**19.01.2011 Patentblatt 2011/03**

(21) Anmeldenummer: **03779923.6**

(22) Anmeldetag: **14.11.2003**

(51) Int Cl.:
**B60T 8/17** (2006.01)

(86) Internationale Anmeldenummer:
**PCT/EP2003/012723**

(87) Internationale Veröffentlichungsnummer:
**WO 2004/048170 (10.06.2004 Gazette 2004/24)**

(54) **VERFAHREN ZUR ERMITTLUNG EINER FAHRZEUG-REFERENZGESCHWINDIGKEIT**

METHOD FOR DETERMINING A REFERENCE SPEED FOR A VEHICLE

PROCEDE POUR DETERMINER UNE VITESSE DE REFERENCE POUR UN VEHICULE

(84) Benannte Vertragsstaaten:
**AT BE BG CH CY CZ DE DK EE ES FI FR GB GR HU IE IT LI LU MC NL PT RO SE SI SK TR**

(30) Priorität: **22.11.2002 DE 10254628**

(43) Veröffentlichungstag der Anmeldung:
**24.08.2005 Patentblatt 2005/34**

(73) Patentinhaber:
- **Volkswagen Aktiengesellschaft**
  **38436 Wolfsburg (DE)**
- **Conti Temic microelectronic GmbH**
  **90411 Nürnberg (DE)**

(72) Erfinder:
- **GÄRTNER, Volker**
  **33678 Clausthal-Zellerfeld (DE)**
- **WEHREN, Volker**
  **38440 Wolfsburg (DE)**
- **DITTRICH, Helge**
  **38162 Gardessen (DE)**
- **RINCK, Rainer**
  **91217 Hersbruck (DE)**

(56) Entgegenhaltungen:
**EP-A- 0 322 911    EP-A- 0 342 789**
**US-A- 5 058 019    US-A- 5 644 490**

## Beschreibung

Die Erfindung betrifft ein Verfahren zur Ermittlung einer Fahrzeug-Referenzgeschwindigkeit eines Kraftfahrzeugs, die zur Auswahl einer geeigneten Übersetzung eines Getriebes des Kraftfahrzeugs herangezogen wird.

Bei der automatischen Auswahl einer Getriebeübersetzung soll die Geschwindigkeit des Fahrzeugs über dem Untergrund berücksichtigt werden. Dazu werden Sensoren zur Messung der Geschwindigkeit oder der Beschleunigung an einem oder mehreren Fahrzeugrädern angebracht. Eine direkt gemessene oder durch Integration einer gemessenen Beschleunigung ermittelte und im Falle von Sensoren an mehreren Rädern gemittelte Geschwindigkeit wird als Fahrzeug-Referenzgeschwindigkeit zur Auswahl der Übersetzung eines Getriebes herangezogen. Die Verfahren nach dem Stand der Technik liefern im Falle von Schlupf mindestens eines Rades keine geeignete Fahrzeug-Referenzgeschwindigkeit zur Auswahl der Übersetzung des Getriebes mehr.

Radschlupf wird auch bei Anti-Blockier-Brems-Regelungssystemen berücksichtigt. Diese verwenden verschiedene mathematische Manipulationen, um die Geschwindigkeit eines Fahrzeuges für einen Vergleich mit der Rotationsgeschwindigkeit eines gegebenen Fahrzeugrades zur Berechnung eines Radschlupfes für dieses Rad abzuschätzen, wobei der Radschlupf ein Parameter ist. Die DE-T2 689 08 007 beschreibt ein Verfahren für die Abschätzung einer Referenzgeschwindigkeit bzw. Referenzbeschleunigung durch periodische Extrapolation. Dieses Verfahren liefert aber keine geeignete Fahrzeug-Referenzgeschwindigkeit zur Auswahl der Übersetzung des Getriebes.

Ein Verfahren zur Ermittlung einer Fahrzeug-Referenzgeschwindigkeit gemäß dem Oberbegriff des Anspruchs 1 ist aus US 5058019 bekannt.

Der Erfindung liegt daher die Aufgabe zugrunde, ein Verfahren zur Ermittlung einer Fahrzeug-Referenzgeschwindigkeit eines Kraftfahrzeugs anzugeben, so daß bei Radschlupf, auch bei gleichzeitigem Makroschlupf an allen Rädern, eine Fahrzeug-Referenzgeschwindigkeit bereitgestellt ist, die zur Auswahl einer geeigneten Übersetzung eines Getriebes des Kraftfahrzeugs herangezogen werden kann.

Diese Aufgabe wird nach der Erfindung durch die Kombination der Merkmale des Anspruchs 1 gelöst.

Die Erfindung betrifft ein Verfahren für die Auswahl einer geeigneten Getriebeübersetzung, bei dem eine Fahrzeug-Referenzgeschwindigkeit ($v_{ref}$) bestimmt wird, indem die tatsächliche mit einer maximal möglichen Beschleunigung ($a_{max}$) verglichen wird. Dazu werden eine Geschwindigkeit und eine Beschleunigung gemessen. Das Messen der Geschwindigkeit kann dabei mit Beschleunigungssensoren durch die Integration von Beschleunigungsmessdaten über die Zeit erfolgen.

Nun wird geprüft, ob die gemessene Beschleunigung ($a_{ist}$) die maximal mögliche Beschleunigung ($a_{max}$) überschreitet. Die maximal mögliche Beschleunigung ($a_{max}$) wird vorzugsweise unter der Annahme größtmöglicher realer Reibung zwischen Rad und Straße ermittelt.

Falls die gemessene Beschleunigung ($a_{ist}$) die maximal mögliche Beschleunigung ($a_{max}$) nicht überschreitet wird die Fahrzeug-Referenzgeschwindigkeit ($v_{ref}$) unter Verwendung der Meßwerte ermittelt.

Falls die gemessene Beschleunigung ($a_{ist}$) die maximal mögliche Beschleunigung ($a_{max}$) überschreitet, wird eine Fahrzeug-Referenzbeschleunigung ($a_{ref}$) in Abhängigkeit der Überschreitung der gemessenen Beschleunigung ($a_{ist}$) über die maximal mögliche Beschleunigung ($a_{max}$) ermittelt und mit dieser die Fahrzeug-Referenzgeschwindigkeit ($v_{ref}$).

Das Ermitteln der Fahrzeug-Referenzbeschleunigung ($a_{ref}$) erfolgt bevorzugt mit Hilfe eines Beschleunigungs-Korrekturfaktors (BKF). Dieser Beschleunigungs-Korrekturfaktor (BKF) wird vorteilhaft berechnet durch $BKF = (a_{ist} - a_{max})/(a_{top} - a_{max})$. wobei $a_{top}$ eine maximale fahrzeugspezifische Beschleunigung, ermittelt unter der Annahme kleinstmöglicher Reibung zwischen Rad und Straße ist.

Die Fahrzeug-Referenzbeschleunigung wird damit vorzugsweise berechnet durch $a_{ref} = (1 - BKF)* (a_{max} - a_{min}) + a_{min}$, wobei $a_{min}$ eine minimale fahrzeugspezifische Beschleunigung, ermittelt unter der Annahme unendlich großer Reibung zwischen Rad und Straße ist.

Das Ermitteln der Fahrzeug-Referenzgeschwindigkeit ($v_{ref}$) erfolgt bevorzugt durch Integration der Fahrzeug-Referenzbeschleunigung ($a_{ref}$) über die Zeit.

Nach einer weiteren vorteilhaften Ausgestaltung der Erfindung wird das Verfahren wiederholt während das Fahrzeug fährt.

Die Fahrzeug-Referenzgeschwindigkeit ($v_{ref}$) wird vorzugsweise zur Bestimmung einer Getriebeübersetzung herangezogen.

Ein Kraftfahrzeug gemäß der vorliegenden Erfindung hat ein automatisches Getriebe gesteuert mit dem Verfahren zur Ermittlung einer Fahrzeug-Referenzgeschwindigkeit ($v_{ref}$) und insbesondere ein entsprechend ausgebildetes Steuer-/Regelgerät.

Weitere Vorteile und Einzelheiten der Erfindung ergeben sich aus der nachfolgenden Beschreibung bevorzugter Ausführungsbeispiele anhand der Zeichnung.

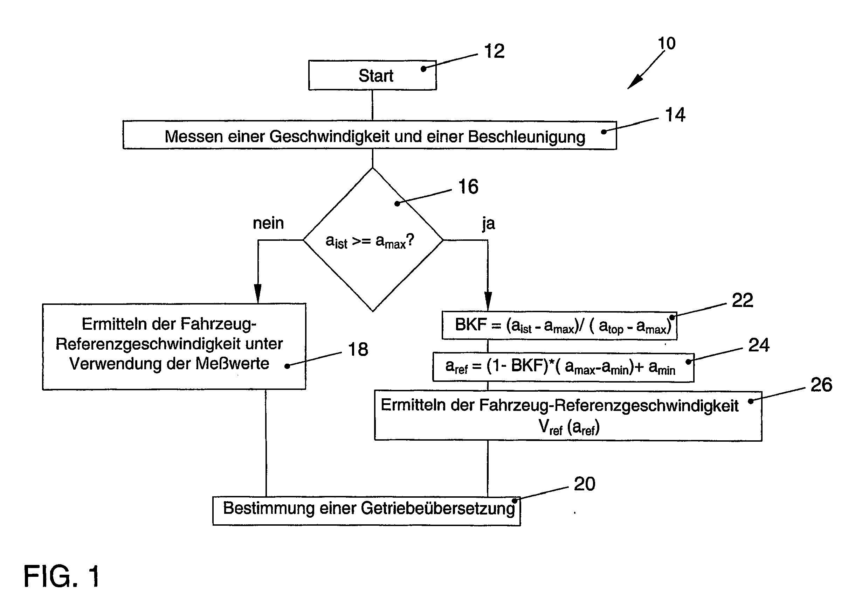

Fig. 1 zeigt ein Flußdiagramm eines Verfahrens gemäß der Erfindung.

In Fig. 1 zeigt das Flußdiagramm 10 ein Verfahren zur Ermittlung einer Fahrzeug-Referenzgeschwindigkeit gemäß der Erfindung.

Das Verfahren startet in Schritt 12, gefolgt von einem Messen einer Geschwindigkeit und einer Beschleunigung in Schritt 14. In Schritt 16 erfolgt ein Prüfen, ob die gemessene Beschleunigung ($a_{ist}$) eine maximal mögliche Beschleunigung ($a_{max}$) überschreitet.

Falls die gemessene Beschleunigung ($a_{ist}$) die maximal mögliche Beschleunigung ($a_{max}$) nicht überschreitet ($a_{ist} < a_{max}$), erfolgt in Schritt 18 ein Ermitteln der Fahrzeug-Referenzgeschwindigkeit unter Verwendung der Meßwerte. Mit der ermittelten Fahrzeug-Referenzgeschwindigkeit erfolgt in Schritt 20 eine Bestimmung einer Getriebeübersetzung. Dieser Zweig im Verfahrensablauf repräsentiert den Fall dass kein Rad, oder zumindest kein Rad mit Meßwertaufnehmern, Schlupf hat.

Falls in Schritt 16 die gemessene Beschleunigung ($a_{ist}$) die maximal mögliche Beschleunigung ($a_{max}$) überschreitet, ($a_{ist} >= a_{max}$), erfolgt in Schritt 22 ein Berechnen eines Beschleunigungs-Korrekturfaktors (BKF) durch BKF = ($a_{ist} - a_{max}$) / ($a_{top} - a_{max}$), wobei $a_{top}$ eine maximale fahrzeugspezifische Beschleunigung, ermittelt der Annahme kleinstmöglicher Reibung zwischen Rad und Straße ist. Mit dem Beschleunigungs-Korrekturfaktor BKF wiederum wird in Schritt 24 eine Fahrzeug-Referenzbeschleunigung durch $a_{ref}$ = (1 - BKF)*( $a_{max} - S_{min}$) + $a_{min}$ berechnet, wobei $a_{min}$ eine minimale fahrzeugspezifische Beschleunigung, ermittelt unter der Annahme unendlich großer Reibung zwischen Rad und Straße ist.

Das Ermitteln der Fahrzeug-Referenzgeschwindigkeit ($v_{ref}$) erfolgt in Schritt 26 mittels der Fahrzeug-Referenzbeschleunigung ($a_{ref}$), und zwar bevorzugt durch Integration der Fahrzeug-Referenzbeschleunigung ($a_{ref}$) über die Zeit. Mit der ermittelten Fahrzeug-Referenzgeschwindigkeit erfolgt in Schritt 20 eine Bestimmung einer Getriebeübersetzung. Dieser Zweig im Verfahrensablauf repräsentiert den Fall, daß zumindest ein Rad mit Meßwertaufnehmern Schlupf hat.

Weiterhin wird das Verfahren vorzugsweise wiederholt während das Fahrzeug fährt. Damit kann eine korrekte Getriebeübersetzung während der Fahrt ständig bestimmt werden.

## BEZUGSZEICHENLISTE

| | |
|---|---|
| 10 | Flußdiagramm |
| 12 | Start |
| 14 | Messen einer Geschwindigkeit und einer Beschleunigung |
| 16 | $a_{ist} >= a_{max}$? |
| 18 | Ermitteln der Fahrzeug-Referenzgeschwindigkeit unter Verwendung der Meßwerte |
| 20 | Bestimmung einer Getriebeübersetzung |
| 22 | |

$$BKF = (a_{ist} - a_{max})/ (a_{top} - a_{max})$$

24

$$a_{ref} = (1 - BKF)*( a_{max} - a_{min}) + a_{min}$$

26      Ermitteln der Fahrzeug-Referenzgeschwindigkeit $v_{ref}$ ($a_{ref}$)

## Patentansprüche

1. Verfahren zur Ermittlung einer Fahrzeug-Referenzgeschwindigkeit ($v_{ref}$) eines Kraftfahrzeugs, mit folgenden Verfahrensschrittten:

     - Messen (14) einer Geschwindigkeit und einer Beschleunigung;
     - Prüfen (16), ob die gemessene Beschleunigung ($a_{ist}$) eine maximal mögliche Beschleunigung ($a_{max}$) überschreitet;
     - falls die gemessene Beschleunigung ($a_{ist}$) die maximal mögliche Beschleunigung ($a_{max}$) nicht überschreitet;
     - Ermitteln der Fahrzeug-Referenzgeschwindigkeit (18) unter Verwendung der Messwerte; **gekennzeichnet durch** folgende Verfahrensschritte:
     - falls die gemessene Beschleunigung ($a_{ist}$) die maximal mögliche Beschleunigung ($a_{max}$) überschreitet;
     - Ermitteln einer Fahrzeug-Referenzbeschleunigung ($a_{ref}$), wobei die Fahrzeug-Referenzbeschleunigung ($a_{ref}$) (24) mit Hilfe eines Beschleunigungskorrekturfaktors (BKF) erfolgt, der in Abhängigkeit der Überschreitung der gemessenen Beschleunigung ($a_{ist}$) und der maximal möglichen Beschleunigung ($a_{max}$) ermittelt wird; und
     - Ermitteln der Fahrzeug-Referenzgeschwindigkeit (26) unter Verwendung dieser Fahrzeug-Referenzbeschleunigung ($a_{ref}$).

2. Verfahren zur Ermittlung einer Fahrzeug-Referenzgeschwindigkeit nach Anspruch 1, **dadurch gekennzeichnet, dass** der Beschleunigungs-Korrekturfaktor (BKF) berechnet wird (22) durch BKF = ($a_{ist} - a_{max}$)/($a_{top} - a_{max}$), wobei $a_{top}$ eine maximale fahrzeugspezifische Beschleunigung, ermittelt unter der Annahme kleinstmöglicher Reibung zwischen Rad und Straße ist.

3. Verfahren zur Ermittlung einer Fahrzeug-Referenzgeschwindigkeit nach einem der Ansprüche 1 oder 2, **dadurch gekennzeichnet, dass** die Fahrzeug-Referenzbeschleunigung berechnet wird (24) durch $a_{ref}$ = (1 - BKF)*($a_{max} - a_{min}$) + $a_{min}$, wobei $a_{min}$ eine minimale fahrzeugspezifische Beschleunigung, ermittelt unter der Annahme unendlich großer Reibung zwischen Rad und Straße ist.

4. Verfahren zur Ermittlung einer Fahrzeug-Referenzgeschwindigkeit nach einem der vorhergehenden Ansprüche, **dadurch gekennzeichnet, dass** das Ermitteln der Fahrzeug-Referenzgeschwindigkeit (v$_{ref}$) durch Integration der Fahrzeug-Referenzbeschleunigung (a$_{ref}$) über die Zeit erfolgt.

**5.** Verfahren zur Ermittlung einer Fahrzeug-Referenzgeschwindigkeit nach einem der vorhergehenden Ansprüche, **dadurch gekennzeichnet, dass** das Messen der Geschwindigkeit die Integration von Beschleunigungsmessdaten über die Zeit umfaßt.

**6.** Verfahren zur Ermittlung einer Fahrzeug-Referenzgeschwindigkeit nach einem der vorhergehenden Ansprüche, **dadurch gekennzeichnet, dass** die maximal mögliche Beschleunigung (a$_{max}$) unter der Annahme größtmöglicher realer Reibung zwischen Rad und Straße ermittelt wird.

**7.** Verfahren zur Ermittlung einer Fahrzeug-Referenzgeschwindigkeit nach einem der vorhergehenden Ansprüche, **dadurch gekennzeichnet, dass** das Verfahren wiederholt wird während das Fahrzeug fährt.

**8.** Verfahren zur Ermittlung einer Fahrzeug-Referenzgeschwindigkeit nach einem der vorhergehenden Ansprüche, **dadurch gekennzeichnet, dass** die Fahrzeug-Referenzgeschwindigkeit (v$_{ref}$) zur Bestimmung einer Getriebeübersetzung herangezogen wird (20).

**9.** Kraftfahrzeug mit einem automatischen Getriebe gesteuert mit dem Verfahren zur Ermittlung einer Fahrzeug-Referenzgeschwindigkeit nach einem der vorhergehenden Ansprüche.


**Claims**

**1.** Method for determining a vehicle reference speed (v$_{ref}$) of a motor vehicle, having the following method steps:

- measurement (14) of a speed and of an acceleration;
- checking (16) whether the measured acceleration (a$_{act}$) exceeds a maximum possible acceleration (a$_{max}$) ;
- if the measured acceleration (a$_{act}$) does not exceed the maximum possible acceleration (a$_{max}$);
- determination of the vehicle reference speed (18) using the measured value; **characterized by** the following method steps:
- if the measured acceleration (a$_{act}$) exceeds the maximum possible acceleration (a$_{max}$);
- determination of a vehicle reference acceleration (a$_{ref}$), wherein the vehicle reference acceleration (a$_{ref}$) (24) is determined using an acceleration correction factor (BKF) which is determined as a function of the upward transgression of the measured acceleration (a$_{act}$) and of the maximum possible acceleration (a$_{max}$); and
- determination of the vehicle reference speed (26) using this vehicle reference acceleration (a$_{ref}$).

**2.** Method for determining a vehicle reference speed according to Claim 1, **characterized in that** the acceleration correction factor (BKF) is calculated (22) by means of BKF = (a$_{act}$ - a$_{max}$)/(a$_{top}$ - a$_{max}$), wherein a$_{top}$ is a maximum vehicle-specific acceleration, determined assuming the smallest possible friction between the wheel and the road.

**3.** Method for determining a vehicle reference speed according to one of Claims 1 and 2, **characterized in that** the vehicle reference acceleration is calculated (24) by means of a$_{ref}$ = (1 - BKF)*(a$_{max}$ - amin) + a$_{min}$, where a$_{min}$ is a minimum vehicle-specific acceleration, determined assuming infinitely large friction between the wheel and the road.

**4.** Method for determining a vehicle reference speed according to one of the preceding claims, **characterized in that** the determination of the vehicle reference speed (v$_{ref}$) is carried out by integrating the vehicle reference acceleration (a$_{ref}$) over time.

**5.** Method for determining a vehicle reference speed according to one of the preceding claims, **characterized in that** the measurement of the speed comprises the integration of acceleration measurement data over time.

**6.** Method for determining a vehicle reference speed according to one of the preceding claims, **characterized in that** the maximum possible acceleration (a$_{max}$) is determined assuming the maximum possible real friction between the wheel and the road.

**7.** Method for determining a vehicle reference speed according to one of the preceding claims, **characterized in that** the method is repeated while the vehicle is travelling.

**8.** Method for determining a vehicle reference speed according to one of the preceding claims, **characterized in that** the vehicle reference speed (v$_{ref}$) is used (20) to determine a transmission ratio.

**9.** Motor vehicle having an automatic transmission controlled with the method for determining a vehicle reference speed according to one of the preceding claims.

## Revendications

1. Procédé de détermination d'une vitesse de référence ($v_{ref}$) d'un véhicule, le procédé présentant les étapes suivantes :

   - mesurer (14) une vitesse et une accélération,
   - vérifier (16) si l'accélération mesurée ($a_{ist}$) dépasse une accélération maximale admissible ($a_{max}$),
   - au cas où l'accélération mesurée ($a_{ist}$) ne dépasse pas l'accélération maximale admissible ($a_{max}$) :
   - déterminer la vitesse de référence (18) du véhicule en utilisant les valeurs de mesure,

   le procédé étant **caractérisé par** les étapes suivantes :

   - au cas où l'accélération mesurée ($a_{ist}$) dépasse l'accélération maximale admissible ($a_{max}$) :
   - déterminer une accélération de référence ($a_{ref}$) du véhicule, l'accélération de référence ($a_{ref}$) (24) du véhicule s'obtenant à l'aide d'un facteur (BKF) de correction de l'accélération qui est déterminé en fonction du dépassement de l'accélération mesurée ($a_{ist}$) et de l'accélération maximale admissible ($a_{max}$) et
   - déterminer la vitesse de référence (26) du véhicule en recourant à cette accélération de référence ($a_{ref}$) du véhicule.

2. Procédé de détermination d'une vitesse de référence d'un véhicule selon la revendication 1, **caractérisé en ce que** le facteur (BKF) de correction de l'accélération est calculé (22) par $BKF = (a_{ist} - a_{max})/(a_{top} - a_{max})$, $a_{top}$ représentant l'accélération maximale spécifique au véhicule, en supposant que le frottement entre la roue et la chaussée est le plus petit possible.

3. Procédé de détermination d'une vitesse de référence d'un véhicule selon l'une des revendications 1 ou 2, **caractérisé en ce que** l'accélération de référence du véhicule est calculée (24) par $a_{ref} = (1-BKF)*(a_{max} - a_{min}) + a_{min}$, $a_{min}$ étant une accélération minimale spécifique au véhicule, en supposant que le frottement entre la roue et la chaussée est infiniment grand.

4. Procédé de détermination d'une vitesse de référence d'un véhicule selon l'une des revendications précédentes, **caractérisé en ce que** la détermination de la vitesse de référence ($v_{ref}$) du véhicule s'effectue en intégrant par rapport au temps l'accélération de référence ($a_{ref}$) du véhicule.

5. Procédé de détermination d'une vitesse de référence d'un véhicule selon l'une des revendications précédentes, **caractérisé en ce que** la mesure de la vitesse comprend l'intégration des données de mesure d'accélération en fonction du temps.

6. Procédé de détermination d'une vitesse de référence d'un véhicule selon l'une des revendications précédentes, **caractérisé en ce que** l'accélération maximale admissible ($a_{max}$) est déterminée en supposant le frottement réel le plus grand possible entre la roue et la chaussée.

7. Procédé de détermination d'une vitesse de référence d'un véhicule selon l'une des revendications précédentes, **caractérisé en ce que** le procédé est répété pendant que le véhicule se déplace.

8. Procédé de détermination d'une vitesse de référence d'un véhicule selon l'une des revendications précédentes, **caractérisé en ce que** la vitesse de référence ($v_{ref}$) du véhicule est prise en compte (20) dans la détermination d'un rapport de transmission.

9. Véhicule automobile doté d'une transmission automatique commandé à l'aide du procédé de détermination d'une vitesse de référence d'un véhicule selon l'une des revendications précédentes.

EP 1 565 363 B1

```
                              ┌──────────────┐ •  ─── 12          ↙ ─── 10
                              │     Start    │
                              └──────┬───────┘
                                     │
        ┌────────────────────────────┴────────────────────────────┐ • ─── 14
        │   Messen einer Geschwindigkeit und einer Beschleunigung   │
        └────────────────────────────┬────────────────────────────┘
                                     │
                                    ╱ ╲   ─── 16
      nein                         ╱   ╲                     ja
    ┌────────────────────────────╱     ╲──────────────────────┐
    │                           ╲  aₐᵢₛₜ >= aₘₐₓ ?  ╱          │
    ↓                            ╲   ╱                          ↓
```

$a_{ist} >= a_{max}$?

┌───────────────────────────────┐            ┌──────────────────────────────────┐ • ─── 22
│  Ermitteln der Fahrzeug-       │            │ BKF = $(a_{ist} - a_{max})/ (a_{top} - a_{max})$ │
│  Referenzgeschwindigkeit unter │ ─── 18     └──────────────────────────────────┘
│  Verwendung der Meßwerte      │ •          ┌──────────────────────────────────┐ ─── 24
└───────────────────────────────┘            │ $a_{ref} = (1- BKF)*(a_{max}-a_{min})+ a_{min}$ │ •
                                             └──────────────────────────────────┘
                                             ┌──────────────────────────────────────┐ • ─── 26
                                             │ Ermitteln der Fahrzeug-Referenzgeschwindigkeit │
                                             │            $V_{ref} (a_{ref})$                  │
                                             └──────────────────────────────────────┘

              ┌────────────────────────────────────┐ • ─── 20
              │  Bestimmung einer Getriebeübersetzung │
              └────────────────────────────────────┘

# FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 68908007 T2
- US 5058019 A